# EUROPEAN PATENT SPECIFICATION

(11) **EP 3 264 059 B1**
(45) Date of publication and mention of the grant of the patent: **30.01.2019**
(21) Application number: 16305776.3
(22) Date of filing: 27.06.2016
(51) Int. Cl.: G01K 1/18, G01K 7/18

(54) **TEMPERATURE SENSOR WITH HEAT TRANSFER ELEMENT AND FABRICATION METHOD**
TEMPERATURSENSOR MIT WÄRMEÜBERTRAGUNGSELEMENT UND HERSTELLUNGSVERFAHREN
CAPTEUR DE TEMPÉRATURE À ÉLÉMENT DE TRANSFERT DE CHALEUR ET PROCÉDÉ DE FABRICATION

(43) Date of publication of application: 03.01.2018
(73) Proprietor: MEAS France, 31027 Toulouse Cedex 3 (FR)
(72) Inventor: PECQUET, Nicolas Christophe R, 77510 Doue (FR); BOUMEDDANE, Hamza, 77124 Villenoy (FR)
(74) Representative: Grünecker Patent- und Rechtsanwälte PartG mbB

(56) References cited:
- DE-A1- 1 648 188
- DE-A1- 10 158 527
- FR-A1- 2 348 550
- FR-A1- 2 551 208
- FR-A1- 2 880 685
- GB-A- 1 152 149
- JP-A- H05 164 624
- US-A- 4 721 534
- US-B2- 7 817 010

## Description

The present invention relates to a temperature sensor comprising a temperature sensing element for transducing a sensed temperature into an electrical output signal. The present invention further relates to a method for fabricating such a temperature sensor. The temperature sensor according to the present invention is applicable in particular for monitoring high temperatures.

Temperature sensors which form an electrical output signal from a sensed temperature are needed in many fields of industrial production and automotive applications. Such temperature sensors essentially comprise an outer protective housing that is in contact with a medium to be monitored, and a temperature sensitive element which is arranged inside the protective housing and transduces the sensed temperature into the electrical output signal. In order to achieve fast response time and an accurate measurement, it is essential that a particularly good thermally conductive connection is provided between the temperature sensitive element and the outside medium, so that the temperature at the site of the temperature sensitive element mirrors the temperature outside the protective housing as exactly as possible.

On the other hand, for instance in automotive application environments it is required that the temperature sensor is robust (in particular vibration stable) and withstands elevated temperatures (up to 1000°C). Consequently, it is known to fill the space between the inner walls of the protective housing and the outer surface of the temperature sensitive element with a ceramic material, for instance a cement or powder.

DE 101 58 527 A1 discloses a temperature sensor that is improved to prevent deterioration in the holding strength of a holding member caused by being exposed to an exhaust gas as a measurement medium, in the case of an exhaust temperature sensor. A ceramic substrate is mounted with a temperature sensing element for temperature detection is housed in a tubular case capable of introducing thereto the measurement medium from one end side thereof. A holding member for holding the ceramic substrate at an inner wall of the case is interposed between the case and the ceramic substrate. The holding member comprises a wire netting part disposed around the ceramic substrate to elastically support the ceramic substrate at the case and a plate-like isolation part disposed on the side of the netting part facing the one end of the case to isolate the netting part from the exhaust gas.

FR 2 880 685 A1 relates to a temperature sensor for a motor vehicle which has a massive ceramic cap inserted between a heat sensitive unit and a protective housing, wherein the unit is connected to conducting wires which are insulated and maintained by a ceramic insulating sheath. The sensor has a heat sensitive unit placed in a protective housing. A massive ceramic cap is inserted between the unit and the housing. The unit is connected to conducting wires which are insulated and maintained by a ceramic insulating sheath. The cap has an orifice to receive the unit, where the orifice is complimentary to an outer cover of a unit to tightly adopt the surface of the unit.

From US 4 721 534 A an immersion pyrometer is known. In particular, this document discloses a protective sheath for a temperature sensing device for use in determining the temperature of molten metals. The temperature sensing device, such as a thermocouple, is encased in a molybdenum tube which is coated with successive porous layers of molybdenum, a plurality of layers of Al₂O₃-Cr₂O₃-Mo in a decreasing concentration of Mo in proceeding from the inner to the outer layers, and a layer of substantially pure Al₂O₃-Cr₂O₃. The Al₂O₃-Cr₂O₃ layer may be covered with an outer coating of a material, such as boron nitride, to protect the Al₂O₃-Cr₂O₃ layer from attack by slag. Alternating layers of Al₂O₃-Cr₂O₃ and boron nitride may be applied as outermost sacrificial layers.

FR 2 551 208 A1 discloses a thermocouple device. The ends of the wires, which serve as a thermo pair of a thermocouple, are enclosed by a heat-resistant sleeve, and are fused to form a mixed metal body. This mixed metal body is axially pressed into a recess provided in a heat-conducting plate member. The heat-conducting plate member protrudes beyond the end of the sleeve and the end face of said plate member is in thermal contact with a metallic heat-conducting housing which axially holds together the sleeve and the heat-conducting plate.

US 7 817 010 B2 discloses a temperature probe assembly which comprises a housing formed of a first thermally conductive material and having an inner diameter defined by an inner bore, an insert formed of a second thermally conductive material disposed in the inner bore and having an outer diameter that is substantially equal to the inner diameter of the housing at a first temperature and a temperature sensor mounted within the insert. The second thermally conductive material has a thermal coefficient of expansion that is greater than the first thermally conductive material, such that the insert is insertable into the inner bore at the first temperature and is tightly locked in the inner bore at a second temperature that is greater than the first temperature.

From DE 16 48 188 A1 a sensing element for a contact thermometer is known. The transducing semiconductor is embedded in a metallic tip or body, for instance made from silver.

GB 1 152 149 A discloses a fluid-filled temperature sensor for a thermostatic switch. The sensor contains an insert formed of woven or knitted metal strands arranged in good thermal contact with the inner wall of the sensor, the insert providing high thermal conduction paths in the space occupied by the fluid. The metal strands, which preferably comprise copper wire of circular cross-section or copper strip, may be hardened and the strands are knitted to form a cloth. The cloth is folded in a zig-zag fashion to form a pad and is inserted in the fluid.

JP H05-164624 A relates to a sheathed thermocouple device and cartridge heater device. To improve reactivity and enhancing the heat transfer property of the sheath, a heat transfer member is attached to the tip part of a sheath so that the member can be freely attached and removed. As may be derived from the abstract, a thermocouple is inserted into a hole formed in a metal mold through the tip part of a sheath. At this time, a heat transfer member, which is attached to the tip part of the sheath, is inserted into the hole together with the sheath, and the outer surface of the member comes into close contact with the inner surface of the hole. The base end part of the sheath is located at the outside of the hole. The leads, which are extending from the base end, are connected to the conductor wires of a measuring circuit. The heat of the metal mold is transferred to a heat sensitive end of a thermocouple element through the inner surface of the hole, the sheath and insulating powder. At this time, the member is in tight contact with the inner surface of the hole.

FR 2 348 550 A1 relates to a temperature sensing thermistor electric insulation which uses an electrically insulating mesh sleeve to house the thermistor to provide simultaneous heat contact and electrical insulation. The method is for electrical insulation of a thermistor used either as a passive temperature sensor or as an active or dynamic temperature sensor for direct control of an electronic regulator or for regulating the gas supply to a burner. The method simultaneously provides good heat contact and good electrical insulation between a wall or a metal housing containing a flexible conductive socket and in whose inner cavity the thermistor is located. The thermistor functions as a dynamic temperature sensor and is accommodated in an electrically insulating intermediate container, that is a protective sleeve having at least one orifice or a mesh, such that the transmission factor, i. e. the ratio between the free entrance cross-section through the mesh and the thickness of the material, is as high as is required.

However, there is still a need for a robust temperature sensor with faster response time and improved accuracy.

This object is solved by the subject matter of the independent claims. Advantageous embodiments of the present invention are the subject matter of the dependent claims.

The present invention provides a temperature sensor comprising a temperature sensing element for transducing a sensed temperature into an electrical output signal, a protective housing for at least partly encasing the temperature sensing element, and a heat transfer element for protecting the temperature sensor element, the heat transfer element being formed as a sheath for receiving at least a part of a transducing region of the temperature element, wherein an outer surface of the heat transfer element is in heat conductive contact with an inner wall of the protective housing.

The present invention is based on the idea that the heat transfer element is manufactured as a prefabricated part separate from said temperature sensor element. Providing a prefabricated heat transfer element has the advantage that no powders or liquids have to be handled when assembling the temperature sensor. According to the present invention, the heat transfer element is formed from an electrically conductive material. When using a temperature sensing element that is covered with an electrically insulating coating or enclosure, it is not necessary that the heat transfer element is electrically insulating, and the higher thermal conductivity of electrically conductive materials can be taken advantage of.

In particular, the use of a porous metal for fabricating the heat transfer element achieves a significantly improved heat transfer from the outside of the protective housing to a sensitive area of the temperature sensing element. In particular compared to ceramic fillings of the protective housing, the thermal conductivity of a porous metal is usually higher. On the other hand, porous metal has sufficient resiliency in order to avoid damaging the temperature sensing element. Moreover, being electrically conductive, the heat transfer element can additionally function as a shielding element against electromagnetic disturbances on the electrical output signal at the site of the temperature sensing element. Compared to a metallic full-material, porous metal is lighter and more ductile. The porosity of the material allows the presence of oxygen around the temperature sensing element, thus ensuring improved long term stability.

In contrast to conventional mineral insulating fillers the thermal conductivity of the porous metal according to the present invention increases with rising temperature for values above 400 °C.

According to the present invention, the heat transfer element is fabricated from a compressed metal wire mesh. Such a construction has the advantage that the surface of the heat transfer element has a spring-like resiliency that cushions the temperature sensing element safely against shock and vibration. The flexibility and compressibility of the metal wire mesh reduces the amount of mechanical stress exerted on the temperature sensing element due to different thermal expansion coefficients of the protective housing and the temperature sensing element.

Advantageously, said compressed metal wire mesh can be formed by a knitted wire mesh. The knitted material has the advantage that the heat transfer element can be fabricated from a single wire or a defined number of wires, thus significantly reducing the risk of loosened wires that could cause short circuits inside the temperature sensor or damage the temperature sensing element.

Apart from compressed wire mesh also any other porous metal can be used for fabricating the heat transfer element. For instance, the heat transfer element can be fabricated from welded or sintered metal particles, from a metal sponge, from a cellular metal, or from metal foam.

It could be shown that the flexibility and resilience, as well as the heat conducting characteristics are particularly advantageous when said heat transfer element has a density of about 45 %, i. e. the voids volume amounts to about 55 %.

Moreover, the heat transfer element may also be fabricated as a solid part by means of 3D printing, machining, or molding.

Advantageously, corrosion resistant, temperature stable and highly heat-conductive metal or metal alloy is chosen for fabricating the heat transfer element. For instance, said metal comprises platinum, copper, aluminium, nickel, nickel chromium alloy, nickel silicon alloy and/or nickel chromium molybdenum niobium alloy. Other metals may of course also be chosen, and the chosen materials also depend on the particular fabrication technique. For instance for producing a knitted wire, a sufficient tensile strength and breaking strength has to be ensured.

Furthermore, the voids of said porous metal and the free spaces of the wire mesh, respectively, may be filled with air or with a metal oxidizing fluid. In connection with platinum resistors temperature sensing elements, it is advantageous that oxygen is present in the filling. Advantageously, the heat transfer element is shaped to have a base region and two opposing side walls extending perpendicularly from said base region and forming a recess for accommodating the temperature sensing element. This form allows receiving the temperature sensing element inside the heat transfer element without being rotatable. Consequently, less abrasive forces can be applied to the temperature sensing element during operation.

For ensuring a sufficient heat transfer from the protective housing towards the temperature sensing element, the heat transfer element has an at least partly cylindrical outline matching with an essentially cylindrical inner outline of the protective housing. Advantageously, a slight press-fit is provided between the protective housing and the heat transfer element.

It is clear for a person skilled in the art that any suitable type of temperature sensing element can be used in a temperature sensor according to the present invention. For instance, said temperature sensing element comprises a resistive temperature detector (RTD), a thermistor, or a silicon-based temperature sensor.

In particular, silicon IC sensors which use single-crystal silicon permit on-chip fabrication of IC (integrated circuit) enhancements. However, the use of IC processes also restricts the operation of silicon based temperature sensors to an upper limit of about 150 °C. Two types of silicon sensors are in general use: spreading resistance based on bulk charge conduction and pn-junction voltage difference. Further, thermistors are based on ceramic-oxide compositions are manufactured to exhibit NTC or PTC (negative, or positive, temperature coefficient) resistance characteristics, where resistance of the sensors decrease, or increase, several orders of magnitude as temperature is increased. In so-called RTD (Resistive Temperature Detector) high-temperature sensors, a platinum-film sensing element is printed and then embedded inside an alumina-ceramic layered structure. The resistance of the platinum element linearly increases as temperature is increased.

The temperature sensor according to the present invention may advantageously be used for automotive applications. Here, in the temperature range of 50 °C to 150 °C, silicon sensors are used for measurement and control of air, gases, and fluids. Thermistor-type sensors operate in various ranges between 55 °C to 1000 °C. Thermistors are used for engine coolant temperature measurement and are also commonly used as level sensors to monitor coolant, fuel, lubricant, brake and steering fluids (where differences between the sensor's self-heating temperatures when immersed and not immersed, in a fluid provide the output signal). To measure very high temperature, over 1050 °C, as required by on board diagnostic (OBD) regulations for catalyst overheat monitoring, both thermistor-type sensor and RTD-type sensors are utilized. To satisfy OBD requirements, these sensors must respond to defined step changes of temperature within a given duration.

For high temperature applications, the RTD is a platinum resistance high temperature sensor, such as a Pt200 sensor.

The present invention also provides a method for fabricating a temperature sensor, said method comprising the following steps:
providing a temperature sensing element that is operable to transduce a sensed temperature into an electrical output signal;
fabricating a protective housing for at least partly encasing the temperature sensing element;
fabricating a heat transfer element from as a prefabricated part separate from said temperature sensor element by compressing an electrically conductive wire mesh;
mounting the heat transfer element over the temperature sensor element, the heat transfer element being formed as a sheath for receiving at least a part of a transducing region of the temperature element,
assembling said protective housing so that an outer surface of the heat transfer element is in heat conductive contact with an inner wall of the protective housing.

Apart from the advantages already mentioned above, this fabrication method has the advantage that it can be performed in a fully automated manner and dispenses with handling any powders or liquids when assembling the temperature sensor.

According to an advantageous embodiment of the present invention, the step of fabricating the porous heat transfer element comprises compressing a knitted wire mesh. According to examples which are not part of the present invention, the step of fabricating the porous heat transfer element comprises welding or sintering metal particles, or producing a metal sponge, a cellular metal, or metal foam.

In the art there exist many well-established fabrication techniques for producing these different porous metal structures.

For instance, compressed knitted wire mesh can be fabricated by knitting and subsequently compressing an Inconel ® 600 wire having a diameter of 0.05 mm. The compression forces can for instance be chosen to produce an amount of remaining voids of about 50 % to 55 %. Optionally, post-knit processing steps, such as corrosion and oxidation preventing steps can be performed. The compressed heat transfer element may furthermore be subjected to an optional annealing step in order to reset the elastic behavior of the wire after the plastic deformation due to the compression step.

Other suitable metals for producing a wire that can be knitted are nickel 200, Nicrosil or Nisil. For low temperature applications, also copper wire with a thermal conductivity of up to 400 W/mK can be used.

According to an example which is not part of the present invention, the heat transfer element is fabricated from inter-linked metal particles. For instance sintered metal particles can be provided which are either compressed in the desired shape or are machined from a sintered blank. Also welding techniques such as shock welding can be used for forming a porous metal heat transfer element from a metal powder.

According to another example which is not part of the present invention, a porous metal structure can moreover also be fabricated from metal foam, sponges, or other cellular metal. For high-temperature applications, stable metals such as nickel and nickel alloys can be used. Porous metal and metallic foams are presently the focus of very active research and development activity and a person skilled in the art is aware of a large number of fabrication techniques for fabricating these structures.

The accompanying drawings are incorporated into the specification and form a part of the specification to illustrate several embodiments and examples of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Further features and advantages will become apparent from the following more particular description of the various embodiments of the invention, as illustrated in the accompanying drawings, in which like references refer to like elements, and wherein:
- **FIG. 1**: is a perspective, partly cut view of a temperature sensor according to an exemplary embodiment of the present invention;
- **FIG. 2**: is a perspective view of a heat transfer element;
- **FIG. 3**: is a side view of the heat transfer element shown in Fig. 2;
- **FIG. 4**: is another side view of the heat transfer element shown in Fig. 2;
- **FIG. 5**: is a top view of the heat transfer element shown in Fig. 2;
- **FIG. 6**: is a perspective view of a heat transfer element formed from knitted wire mesh;
- **FIG. 7**: is a schematic representation of the temperature dependent heat conductivity for Inconel ® 600, aluminium, and nickel 200;
- **FIG. 8**: is a perspective, partly cut view of a temperature sensor according to a further exemplary embodiment of the present invention.

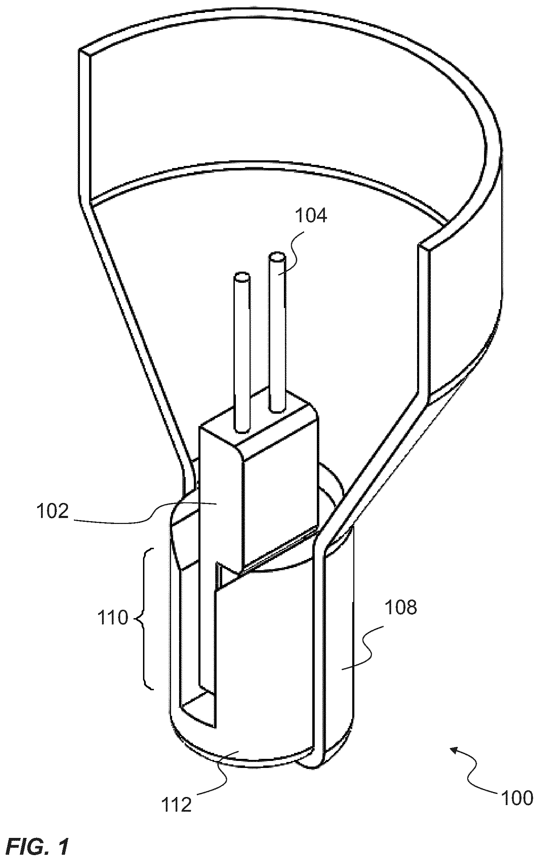

The present invention will now be explained in more detail with reference to the Figures and firstly referring to Fig. 1.

Fig. 1 shows a perspective, partly cut view of a temperature sensor 100 according to an exemplary embodiment of the present invention. Such a temperature sensor can for instance be used for measuring an exhaust gas temperature in an automobile. The temperature sensor 100 comprises a temperature sensing element 102 that is operable to transduce a sensed temperature into an electrical output signal. According to an advantageous embodiment, the temperature sensing element 102 comprises a PT 200 sensor as the actual temperature detector. Platinum sensors are particularly advantageous because of their potential accuracy and long-term stability in the high temperature range. These sensing elements used the thermal coefficient of platinum metal. To reduce the amount of platinum used and in order to gain more signal, most platinum sensing elements are nowadays in the form of thin film resistors.

However, it is clear for a person skilled in the art that any other miniaturized temperature sensing element can be used according to the present invention as well. For instance, the temperature sensing element 102 may comprise another resistive temperature detector (RTD), a thermistor, or a silicon-based semi-conductor temperature sensor.

The electrical output signal is output at electrically conductive leads 104 which are connected to a cable (not shown in the Figures).

One automotive application of high temperature sensors is measuring for instance the temperature of exhaust gas. This means an aggressive atmosphere that might be reductive or oxidizing, contains sulfur, nitrogen, hydrogen, oxygen, and all kinds of compounds thereof. This in conjunction with the temperature determines materials for housings and fittings. Consequently, the cable may for instance be a mineral insulated cable.

Furthermore, for protecting the temperature sensing element 102 against the aggressive atmosphere, a protective housing 108 is provided. In Fig. 1, the protective housing 108 is shown in a cut view in order to show the temperature sensing element 102 and the heat transfer element 112 mounted inside. The protective housing 108 preferably is tube-shaped and receives the temperature sensing element 102. The protective housing 108 may for instance be fabricated from metal. In order to fill the space between the inner wall of the protective housing 108 and the outer surface of a transducing region 110 of the temperature sensing element 102, a heat transfer element 112 is provided according to the present invention. The heat transfer element 112 replaces the ceramic powder filling which is used with conventional temperature sensors.

According to the present invention, the heat transfer element 112 is fabricated before the assembly of the temperature sensor 100 and is for instance formed from an electrically conductive material. More specifically, the heat transfer element 112 may be fabricated from a porous metal.

An advantage of such a construction can be seen in the fact that no powders or fluids have to be handled when assembling the temperature sensor 100. The heat transfer element 112 provides a heat conductive path between the inner wall of the protective housing 108 and an outer surface of the transducing region 110 of the temperature sensing element 102. Moreover, the mechanically sensitive transducing region 110 is secured against vibrations and shock. The heat transfer element may for instance be fabricated by means of 3D printing, machining, sintering, stamping, molding or the like.

Furthermore, the heat transfer element 112 can be fabricated by any suitable technique of forming a porous metal structure. As mentioned above, the heat transfer element may be fabricated from compressed wire mesh, preferably a knitted wire mesh, welded or sintered metal particles, or from a metal sponge, a cellular metal, or metal foam. For all these materials an important aspect is that voids are present within the metallic matrix. This leads to a mechanical flexibility that allows the absorption of shock and vibrations, while still benefiting from the superior thermal conductivity of metal.

According to the present invention, the heat transfer element 112 is fabricated from a knitted and compressed wire mesh. It could be shown, that for instance from an Inconel ® 600 wire with a cross-sectional diameter of 0.05 mm heat transfer elements with a density of about 45% can be fabricated by compressing the knitted wire mesh. Accordingly, a percentage of voids of about 55% are present. These voids may either be filled with air, an inert gas or with a heat conducting fluid. The knitting process allows producing a solid part with a single wire or a known number of wires, thereby reducing significantly the risk of loose wires compared to woven meshing.

Replacing the conventional mineral insulated filler material by the metal knitted heat transfer element 112 improves the thermal conduction between the protective housing 108 and the temperature sensing element 102. Consequently, a significantly improved response time can be achieved. The porosity of the knitted mesh furthermore allows the presence of oxygen around the temperature sensing element 102, which in the case of a platinum thermo-resistant element ensures a better long-term stability.

Furthermore, the flexibility and compressibility of the knitted mesh reduce the level of mechanical stress exerted on the temperature sensing element 102 due to heat expansion of the involved materials.

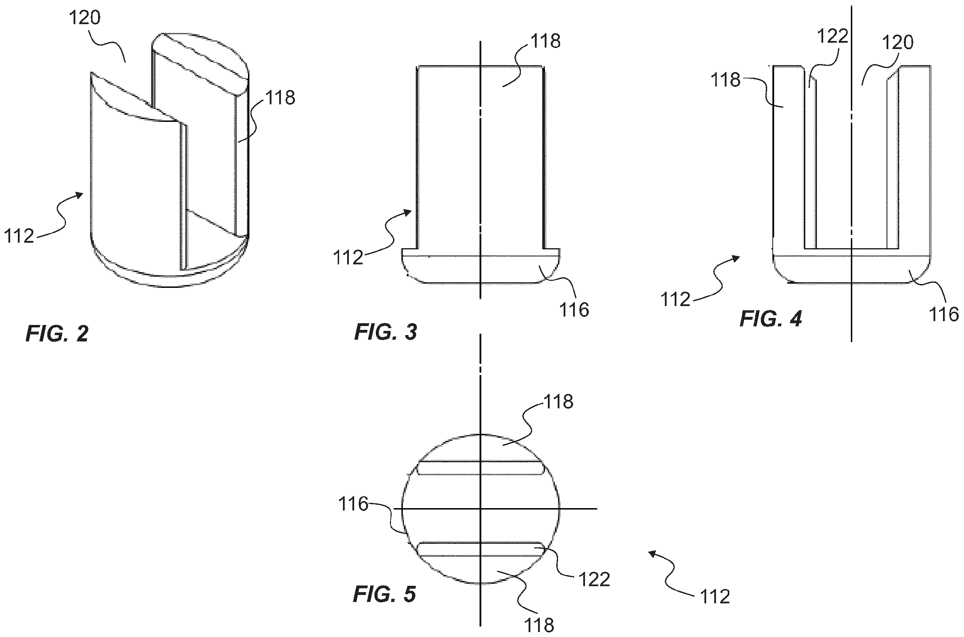

Fig. 2 to 5 illustrate an advantageous embodiment of the heat transfer element 112 that can be used in the arrangement shown in Fig. 1. It should be noted, that the geometric dimensions can be realized by any of the above-mentioned techniques for fabricating a porous metal.

As shown in Fig. 2, the heat transfer element 112 comprises a base region 116 and two opposing side walls 118 which extend essentially perpendicularly from the base region 116. The base region 116 and the sidewalls 118 together form a recess 120 for accommodating the transducing region 110. The outer surface of the heat transfer element 112 is formed to match the inner surface of the protective housing 108. Thus, in the finally assembled state, the heat transfer element 112 is in heat conducting contact with the protective housing 108. On the other hand, the inner walls of the sidewalls 118 are in heat conductive contact with the transducing region 110 of the temperature sensing element 102. Thereby, an efficient heat transfer from the outside environment through the protective housing 108 and the heat transfer element 112 to the transducing region 110 can be achieved.

In order to avoid damaging the temperature sensing element 102 when inserting same into the heat transfer element 112, the heat transfer element 112 comprises chamfered regions 122 along the edges of the side walls 118.

As can be seen from Fig. 5, the heat transfer element 112 has an essentially circular outline that fits inside the cylindrical inner space at the peripheral and of the protective housing 108.

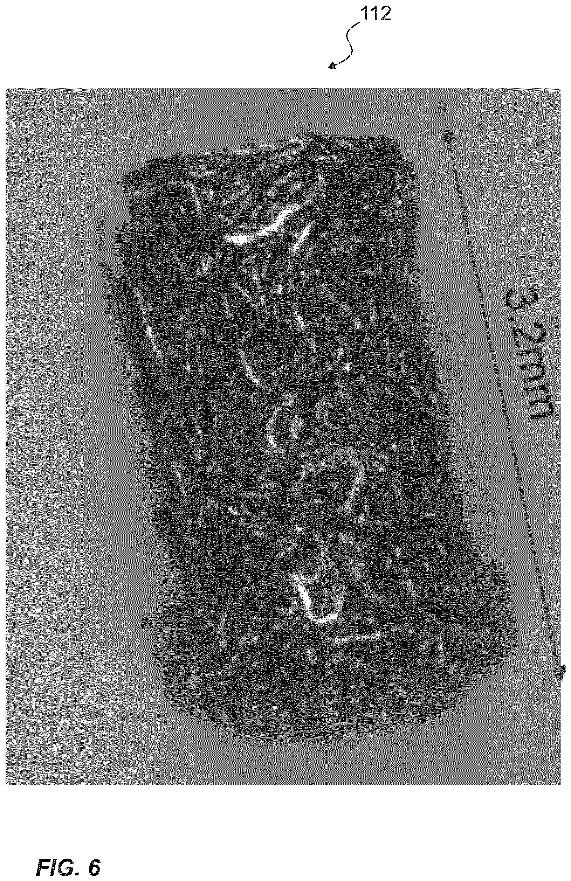

Fig. 6 illustrates a heat transfer element 112 fabricated from a knitted and compressed wire. As already mentioned, the heat transfer element 112 has a density of about 45%, depending on the compressing force and wire diameter of the knitted wire mesh. According to the present invention, the heat transfer element 112 should withstand a temperature range from -40°C to about +1100 °C. The knitted wire mesh should be without defects such as inclusions, lost strands, perforations, or oxidation. Preferably, a free volume of about 50% is reached.

Preferably, no lost or cut strands are present, so that the heat transfer element 112 is brought into its final form by the compression alone. However, when choosing another possibility of producing the porous metal structure, such as sintered or foamed metal, it may also be advantageous to pre-fabricate a blank which is then brought into the final form by means of a machining process.

Knitted mesh can be fabricated from a large panel of metals. Exemplary wire materials are for instance Inconel ® 600, nickel 200, Nicrosil or Nisil. Furthermore, for applications at lower temperatures, also copper wire can be an option because copper has a high thermal conductivity of up to 400 W/mK.

In order to avoid corrosion or oxidation, optional post-knit processing can be provided. Furthermore, also an annealing step may be performed after the compression has taken place.

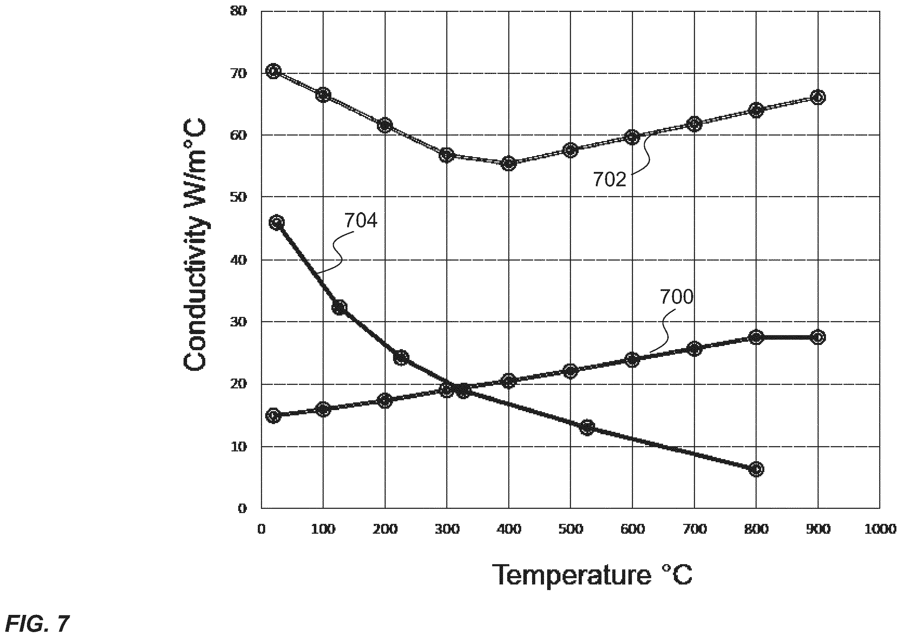

Fig. 7 shows a schematic representation of the temperature dependent heat conductivity for three different wire materials: Inconel ® 600, aluminium, and nickel 200. Curve 700 represents the temperature dependent thermal conductivity of Inconel ® 600, whereas curves 702 and 704 illustrate the thermal conductivity of a heat transfer element 112 fabricated from nickel 200 and element him, respectively. As can be seen from this comparison, nickel 200 as well as Inconel ® 600 exhibit the advantageous characteristics that their thermal conductivity rises with increasing temperature. For nickel 200 this behavior can only be found at temperatures above 400°C.

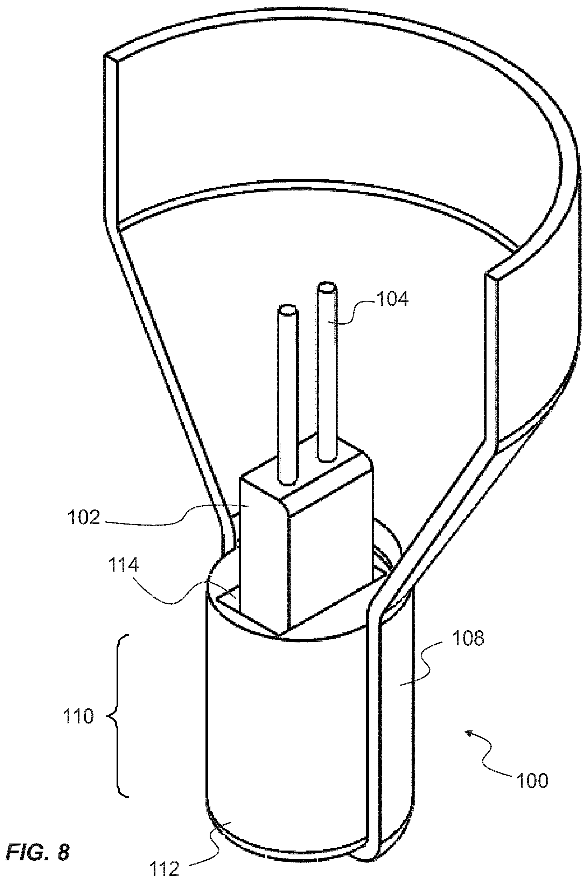

Fig. 8 shows an alternative embodiment of a temperature sensor 100 according to the present invention. In contrast to the first embodiment shown in Fig. 1 to 6, the heat transfer element 112 has a closed rectangular receptacle 114 that receives the temperature sensing element 102. Apart from this difference in its form, all other features explained with reference to Fig. 1 to 6 apply also for the embodiment shown in Fig. 8.

In summary, the present invention provides an improved concept for filling the gap between a temperature sensing elements 102 and a closed protective tube 108 and ensures an improved heat transfer from the tube into the temperature sensing element and dispenses with the usual ceramic cement or powder fillers. The filler can thereby be formed before the temperature sensing element is inserted, which facilitates the fabrication process.

**REFERENCE NUMERALS**

| **Reference Numeral** | **Description** |
|---|---|
| 100 | Temperature sensor |
| 102 | Temperature sensing element |
| 104 | Electrically conductive leads |
| 108 | Protective housing |
| 110 | Transducing region |
| 112 | Heat transfer element |
| 114 | Closed receptacle |
| 116 | Base region |
| 118 | Side wall |
| 120 | Recess |
| 122 | Chamfered regions |
| 700 | Thermal conductivity depending on temperature for Inconel ® 600 |
| 702 | Thermal conductivity depending on temperature for nickel 200 |
| 704 | Thermal conductivity depending on temperature for aluminium |

## Claims

1. Temperature sensor comprising:
a temperature sensing element (102) for transducing a sensed temperature into an electrical output signal;
a protective housing (108) for at least partly encasing the temperature sensing element (102);
a heat transfer element (112) for protecting the temperature sensor element (102), the heat transfer element (112) being formed as a sheath for receiving at least a part of a transducing region (110) of the temperature sensor element (102), wherein an outer surface of the heat transfer element (112) is in heat conductive contact with an inner wall of the protective housing (108);
wherein said heat transfer element (112) is a prefabricated part separate from said temperature sensor element (102) and comprises an electrically conductive compressed wire mesh.

2. Temperature sensor according to claim 1, wherein said heat transfer element (112) comprises platinum, copper, aluminium, nickel, nickel chromium alloy, nickel silicon alloy and/or nickel chromium molybdenum niobium alloy.

3. Temperature sensor according to one of the preceding claims, wherein voids of said compressed wire mesh are filled with air or with a metal oxidizing fluid.

4. Temperature sensor according to one of the preceding claims, wherein said heat transfer element (112) has a base region (116) and two opposing side walls (118) extending perpendicularly from said base region (116) and forming a recess (120) for accommodating the temperature sensing element (102).

5. Temperature sensor according to claim 4, wherein said heat transfer element (112) has an at least partly cylindrical outline matching with an essentially cylindrical inner outline of the protective housing (108).

6. Temperature sensor according to one of the preceding claims, wherein said temperature sensing element (102) comprises a resistive temperature detector (RTD), a thermistor, or a silicon-based temperature sensor.

7. Temperature sensor according to claim 6, wherein the RTD is a platinum resistance high temperature sensor.

8. Method for fabricating a temperature sensor, said method comprising the following steps:
providing a temperature sensing element (102) that is operable to transduce a sensed temperature into an electrical output signal;
fabricating a protective housing (108) for at least partly encasing a transducing region (110) of the temperature sensing element (102);
manufacturing a heat transfer element (112) as a prefabricated part separate from said temperature sensor element (102), wherein the step of manufacturing the heat transfer element (112) comprises compressing an electrically conductive wire mesh;
mounting the heat transfer element (112) over the temperature sensor element (102), the heat transfer element (112) being formed as a sheath for receiving at least a part of the transducing region (110) of the temperature element (102),
assembling said protective housing (108) so that an outer surface of the heat transfer element (112) is in heat conductive contact with an inner wall of the protective housing (108).

9. Method according to claim 8, wherein said heat transfer element (112) is fabricated from platinum, gold, copper, aluminium, nickel, nickel chromium alloy, nickel silicon alloy and/or nickel chromium molybdenum niobium alloy.

## Patentansprüche

1. Temperatur-Sensor, der umfasst:
ein Temperaturerfassungs-Element (102) zum Umwandeln einer erfassten Temperatur in ein elektrisches Ausgangssignal;
ein schützendes Gehäuse (108), das das Temperaturerfassungs-Element (102) wenigstens teilweise umschließt;
ein Wärmeübertragungs-Element (112) zum Schützen des Temperaturerfassungs-Elementes (102), wobei das Wärmeübertragungs-Element (112) als eine Ummantelung ausgebildet ist, die wenigstens einen Teil eines Wandel-Bereiches (110) des Temperaturerfassungs-Elementes (102) aufnimmt, und eine Außenfläche des Wärmeübertragungs-Elementes (112) in Wärmeleit-Kontakt mit einer Innenwand des schützenden Gehäuses (108) ist;
wobei das Wärmeübertragungs-Element (112) ein vorgefertigtes Teil separat von dem Temperaturerfassungs-Element (102) ist und ein elektrisch leitendes zusammengedrücktes Drahtgeflecht umfasst.

2. Temperatur-Sensor nach Anspruch 1, wobei das Wärmeübertragungs-Element (112) Platin, Kupfer, Aluminium, Nickel, Nickel-Chrom-Legierung, Nickel-Silizium-Legierung und/oder Nickel-Chrom-Molybdän-Niob-Legierung umfasst.

3. Temperatur-Sensor nach einem der vorangehenden Ansprüche, wobei Leerräume des zusammengedrückten Drahtgeflechtes mit Luft oder mit einem Metall oxidierenden Fluid gefüllt sind.

4. Temperatur-Sensor nach einem der vorangehenden Ansprüche, wobei das Wärmeübertragungs-Element (112) einen Basis-Bereich (116) und zwei einander gegenüberliegende Seitenwände (118) aufweist, die sich senkrecht von dem Basis-Bereich (116) aus erstrecken und eine Vertiefung (120) zum Aufnehmen des Temperaturerfassungs-Elementes (102) bilden.

5. Temperatur-Sensor nach Anspruch 4, wobei das Wärmeübertragungs-Element (112) eine wenigstens teilweise zylindrische Kontur aufweist, die mit einer im Wesentlichen zylindrischen Innenkontur des schützenden Gehäuses (108) übereinstimmt.

6. Temperatur-Sensor nach einem der vorangehenden Ansprüche, wobei das Temperaturerfassungs-Element (102) einen Widerstandstemperaturmessfühler (RTD), einen Thermistor oder einen Temperatur-Sensor auf Silizium-Basis umfasst.

7. Temperatur-Sensor nach Anspruch 6, wobei der RTD ein Platin-Widerstandhochtemperatur-Sensor ist.

8. Verfahren zum Fertigen eines Temperatur-Sensors, wobei das Verfahren die folgenden Schritte umfasst:
Bereitstellen eines Temperaturerfassungs-Elementes (102), das in Funktion eine erfasste Temperatur in ein elektrisches Ausgangssignal umwandeln kann;
Fertigen eines schützenden Gehäuses (108), das einen Wandel-Bereich (110) des Temperaturerfassungs-Elementes (102) wenigstens teilweise umschließt;
Herstellen eines Wärmeübertragungs-Elementes (112) als ein vorgefertigtes Teil separat von dem Temperaturerfassungs-Element (102), wobei der Schritt des Herstellens des Wärmeübertragungs-Elementes (112) Zusammendrücken eines elektrisch leitenden Drahtgeflechtes umfasst;
Anbringen des Wärmeübertragungs-Elementes (112) über dem Temperaturerfassungs-Element (102), wobei das Wärmeübertragungs-Element (112) als eine Ummantelung ausgebildet wird, die wenigstens einen Teil des Wandel-Bereiches (110) des Temperaturerfassungs-Elementes (102) aufnimmt,
Montieren des schützenden Gehäuses (108) so, dass eine Außenfläche des Wärmeübertragungs-Elementes (112) In Wärmeleit-Kontakt mit einer Innenwand des schützenden Gehäuses (108) ist.

9. Verfahren nach Anspruch 8, wobei das Wärmeübertragungs-Element (112) aus Platin, Gold, Kupfer, Aluminium, Nickel, Nickel-Chrom-Legierung, Nickel-Silizium-Legierung und/oder Nickel-Chrom-Molybdän-Niob-Legierung hergestellt wird.

## Revendications

1. Capteur de température comprenant :
un élément de détection de température (102) pour la transduction d'une température détectée en un signal de sortie électrique ;
un boîtier de protection (108) pour enfermer au moins partiellement l'élément de détection de température (102) ;
un élément de transfert de chaleur (112) pour protéger l'élément de détection de température (102), l'élément de transfert de chaleur (112) étant formé comme une gaine pour recevoir au moins une partie d'une région de transduction (110) de l'élément de détection de température (102), dans lequel une surface extérieure de l'élément de transfert de chaleur (112) est en contact thermoconducteur avec une paroi intérieure du boîtier de protection (108) ;
dans lequel ledit élément de transfert de chaleur (112) est une partie préfabriquée séparée dudit élément de détection de température (102) et comprend un treillis métallique comprimé électriquement conducteur.

2. Capteur de température selon la revendication 1, dans lequel ledit élément de transfert de chaleur (112) comprend du platine, du cuivre, de l'aluminium, du nickel, un alliage nickel-chrome, un alliage nickel-silicium et/ou un alliage nickel-chrome-molybdène-niobium.

3. Capteur de température selon l'une des revendications précédentes, dans lequel des vides dudit treillis métallique comprimé sont remplis d'air ou d'un fluide d'oxydation métallique.

4. Capteur de température selon l'une des revendications précédentes, dans lequel ledit élément de transfert de chaleur (112) présente une région de base (116) et deux parois latérales opposées (118) s'étendant perpendiculairement à partir de ladite région de base (116) et formant un évidement (120) pour loger l'élément de détection de température (102).

5. Capteur de température selon la revendication 4, dans lequel ledit élément de transfert de chaleur (112) a un profil au moins partiellement cylindrique correspondant à un profil intérieur essentiellement cylindrique du boîtier de protection (108).

6. Capteur de température selon l'une des revendications précédentes, dans lequel ledit élément de détection de température (102) comprend un détecteur de température résistif (RTD), une thermistance, ou un capteur de température à base de silicium.

7. Capteur de température selon la revendication 6, dans lequel le RTD est un capteur de température de forte résistance en platine.

8. Procédé de fabrication d'un capteur de température, ledit procédé comprenant les étapes suivantes consistant à :
fournir un élément de détection de température (102) qui est opérationnel pour la transduction d'une température détectée en un signal de sortie électrique ;
fabriquer un boîtier de protection (108) pour enfermer au moins partiellement une région de transduction (110) de l'élément de détection de température (102) ;
fabriquer un élément de transfert de chaleur (112) sous forme d'une partie préfabriquée séparée dudit élément de détection de température (102), dans lequel l'étape de fabrication de l'élément de transfert de chaleur (112) comprend la compression d'un treillis métallique électriquement conducteur ;
monter l'élément de transfert de chaleur (112) sur l'élément de capteur de température (102), l'élément de transfert de chaleur (112) étant formé comme une gaine pour recevoir au moins une partie de la région de transduction (110) de l'élément de détection de température (102),
assembler ledit boîtier de protection (108) de sorte qu'une surface extérieure de l'élément de transfert de chaleur (112) est en contact thermoconducteur avec une paroi intérieure du boîtier de protection (108).

9. Procédé selon la revendication 8, dans lequel ledit élément de transfert de chaleur (112) est fabriqué à partir de platine, d'or, de cuivre, d'aluminium, de nickel, d'un alliage nickel-chrome, d'un alliage nickel-silicium et/ou d'un alliage nickel-chrome-molybdène-niobium.
